# EUROPEAN PATENT SPECIFICATION

(11) **EP 4 097 181 B1**
(45) Date of publication and mention of the grant of the patent: **02.09.2026**
(21) Application number: 20704577.4
(22) Date of filing: 10.01.2020
(51) Int. Cl.: C03C 17/00, C09C 1/00, C09C 3/12, C09D 183/04, B01J 35/45, C09K 23/00, C09K 23/54

(54) **SELF-BINDING SUSPENSIONS COMPRISING TITANIUM DIOXIDE AND ZINC OXIDE NANOPARTICLES AND COATED SUBSTRATES PREPARED USING THE SELF-BINDING SUSPENSIONS**
SELBSTBINDENDE SUSPENSIONEN MIT TITANDIOXID UND ZINKOXID-NANOPARTIKELN UND BESCHICHTETE SUBSTRATE, HERGESTELLT UNTER VERWENDUNG DER SELBSTBINDENDEN SUSPENSIONEN
SUSPENSIONS AUTO-LIANTES COMPRENANT DES NANOPARTICULES DE DIOXYDE DE TITANE ET D'OXYDE DE ZINC ET SUBSTRATS REVÊTUS PRÉPARÉS AU MOYEN DE CES SUSPENSIONS AUTO-LIANTES

(43) Date of publication of application: 07.12.2022
(73) Proprietor: Nanophos SA, 19500 Lavrio (GR)
(72) Inventor: ARAMPATZIS, Ioannis, 19500 Lavrio (GR)
(74) Representative: Mewburn Ellis LLP
(86) International application number: PCT/GR2020/000005
(87) International publication number: WO 2021/140346

(56) References cited:
- WO-A1-2019/239265
- GR-B- 1 007 631

## Description

### FIELD OF THE INVENTION

This disclosure relates to self-binding suspensions for preparing transparent photocatalytic thin films. Specifically, this disclosure relates to self-binding suspensions comprising titanium dioxide, zinc oxide, and silicon dioxide nanoparticles for enhanced photocatalytic activity.

### BACKGROUND OF THE INVENTION

Transparent coatings with anti-fogging, anti-reflective, photocatalytic and self-cleaning properties may be used in products such as windshields, lenses, or solar energy devices. Particularly for solar energy devices, the transparent coatings should meet certain requirements including: enhance the light collection yield; prevent the aging process of the substrate; and minimize maintenance costs. Additionally, coatings or thin inorganic films developed for the surface of solar energy devices should be permanent and have a minimum lifetime of five years.

Conventional nanocomposite formulations and thin films coatings include TiO₂ nanoparticles, SiO₂ nanoparticles, and/or hydrolyzed silanes for hydrophilicity and/or improved adhesion. TiO₂ nanocrystallites exist in three distinct crystal phases: anatase, brookite and rutile. Of these three phases, anatase is generally preferred for photocatalytic activity because of its energy gap in the range of 3.23 eV (n-type semiconductor). When the photoactive titanium dioxide nanoparticles are irradiated by ultraviolet light (i.e., light having a wavelength below 390nm), electrons from the electron-filled valence band are transferred to the vacant conduction band and subsequently leave positive-charged holes in the valence band. This photo-generated charge separation is responsible for photoreduction and photooxidation of different target compounds surrounding the semiconductor particles.

Conventional methods of improving photocatalytic activity of TiO₂ include doping. Doping may be achieved with the addition of dyes, transition metals (e.g., Cr, Zr, Mn), non-metals (e.g., N, S, C), and/or semiconductors (e.g., SiO₂, SnO₂, ZrO₂, ZnO). Furthermore, doping crystal phases of titanium dioxide nanocrystallites can result in better photocatalytic performance and enhance photon capture for solar applications, due to the higher refractive index of rutile vs. anatase (2,488 for anatase and 2,609 for rutile).
GR 1007631 B discloses a stable titanium dioxide suspension produced by ultrasonication of titanium dioxide powder and by addition of a stabilizing salt, a dispersant and a binding solution or suspension. This suspension can be used for the preparation of titanium dioxide nanostructured films or powders with photocatalytic, self-cleaning, self-sterilizing and super-hydrophilic properties.
WO 2019/239265 A1 discloses a coated glass substrate comprising a coating containing at least one metal oxide containing zinc oxide, where the zinc oxide contains 5-50 wt.% zinc (as determined according to X-ray photoelectron spectroscopy), and the coated glass substrate has an area surface roughness (Sa or Sq) of 5-1500 nm (as determined according to atomic force microscopy).

### BRIEF SUMMARY OF INVENTION

Provided herein are self-binding suspensions, coated substrates prepared using self-binding suspensions, and methods of preparing self-binding suspensions. Self-binding suspensions provided herein may be prepared using ultrasonication and may bind to a substrate without the application of heat. Films produced using the disclosed suspensions may be used to produce windshields, lenses and solar energy devices.

Self-binding suspensions provided herein can be used to prepare high-quality thin films. For example, thin films used in solar light applications may be transparent in the visible or near-infrared spectrum. If these thin films are not transparent, they could interfere with the light supplied to the solar energy converter. Further, such films should be able to retain their initial properties (e.g., photocatalytic activity, anti-reflective activity) for a minimum of five years under variable weather conditions and exhibit suitable adhesion to the substrate.

Thus, suspensions provided herein incorporate monodispersed nanoparticles comprising agglomerates not exceeding 200 nm to improve the transparency of the thin films produced from the provided suspensions and minimize the scattering of the visible light. Further, the binary system of titanium dioxide with zinc oxide can provide synergistic effects and performance (e.g., photocatalytic reaction rate, overall refraction) that cannot be achieved when either of the titanium dioxide or zinc oxide nanocrystalline particles are present alone. In particular, the binary system of TiO₂-ZnO shows improved photocatalytic activity compared to pure TiO₂. When the two photoactive oxides (i.e., titanium dioxide and zinc oxide) are combined, a material having improved photocatalytic activity is generated. This is because the valence semiconductor band and the conduction semiconductor band positions of each of the independent nanoparticles are close to each other and tend to overlap (0.30eV for valance band and 2.94eV for conduction band for titanium dioxide and 0.32eV for valance band and 2.88eV for conduction band for zinc oxide). Therefore, the interaction of semiconductors with close valence/conduction band positions results in more effective photocatalytic performance, as a) electron hopping is easier when intermediate bands are present and b) charge separation is more effective, i.e. positive holes and negative electron recombination rate is significantly reduced.

Additionally, suspensions disclosed can readily adhere to porous or non-porous substrates due to the presence of a binder that acts as an adhesion promotor (e.g., silicon dioxide). Further, doping with zinc oxide in particular may be used for its high chemical stability, high refractive index, high thermal conductivity, antibacterial properties, UV-protection and non-toxicity.

In a first aspect, the invention provides a self-binding suspension composition, the composition comprising: 0.0001 to 0.25 wt. % titanium dioxide nanoparticles; 0.00001 to 0.5 wt. % zinc oxide nanoparticles; 4 to 7 wt. % alkoxysilane; 0.000025 to 0.00125 wt. % salt; 0.0002 to 0.01 wt. % dispersant; 0.2 to 0.8 wt. % surfactant; 7 to 12 wt. % alcohol; 0.1 to 0.2 wt. % basic solution; and 80 to 90 wt. % solvent.

In some embodiments of the composition, the salt comprises at least one of Na4P2O7, sodium hydroxide, or sodium chloride.

In some embodiments of the composition, the alcohol comprises at least one of methanol or ethanol.

In some embodiments of the composition, the solvent comprises deionized water.

In some embodiments of the composition, the titanium dioxide nanoparticles are formed from applying ultrasonication to titanium dioxide powder.

In some embodiments of the composition, the zinc oxide nanoparticles are formed from applying ultrasonication to zinc oxide powder.

In a second aspect, the invention provides a coated glass substrate, the coated glass substrate comprising: a glass substrate; and a thin-film coating on the glass substrate, the thin-film coating comprising: 0.001 to 5 wt. % titanium dioxide powder; 0.0001 to 10 wt. % zinc oxide powder; 20 to 35 wt. % alkoxysilane; 0.00025 to 0.026 wt. % salt; 0.002 to 0.2 wt. % dispersant; 1 to 8 wt. % surfactant; 35 to 60 wt. % alcohol; and 0.5 to 4 wt. % basic solution.

In some embodiments of the coated glass substrate, the salt comprises at least one of Na4P207, sodium hydroxide, or sodium chloride.

In some embodiments of the coated glass substrate, the alcohol comprises at least one of methanol or ethanol.

In some embodiments of the coated glass substrate, the solvent comprises deionized water.

In some embodiments of the coated glass substrate, 0.01 to 0.03 L/m² of a self-binding suspension composition is applied to the glass substrate to form the coated glass substrate.

In some embodiments of the coated glass substrate, the coated glass substrate comprises a windshield, a lens, or a solar energy device.

In a third aspect, the invention provides a method of producing a coated glass substrate, the method comprising: preparing a binder solution; preparing a titanium dioxide-zinc oxide suspension; mixing the binder solution with the titanium dioxide-zinc oxide suspension and a surfactant to form a self-binding suspension composition according to the first aspect; and depositing the self-binding suspension composition onto a glass substrate to form a coated glass substrate.

In some embodiments of the method, preparing a binder solution comprises mixing alkoxysilane, an alcohol, a Lewis base, and a first solvent.

In some embodiments of the method, preparing a titanium dioxide-zinc oxide suspension comprises ultrasonifying a salt, a dispersant, titanium dioxide powder, zinc oxide powder, and a second solvent.

In some embodiments of the method, the coated glass substrate comprises a windshield, a lens, or a solar energy device.

In some embodiments of the method, the salt comprises at least one of Na₄P₂O₇, sodium hydroxide, or sodium chloride.

In some embodiments of the method, the alcohol comprises at least one of methanol or ethanol.

In some embodiments of the method, the first solvent and the second solvent comprise deionized water.

In some embodiments of the method, depositing the self-binding suspension onto a glass substrate comprises depositing 0.01 to 0.03 L/m2 of the self-binding suspension composition to the glass substrate.

### BRIEF DESCRIPTION OF THE DRAWINGS

The invention will now be described, by way of example only, with reference to the accompanying drawings, in which:
FIG. 1 provides a process diagram for preparing a self-binding suspension, according to some embodiments;
FIG. 2 shows the water droplet contact angle on an untreated glass substrate and on a glass substrate treated with a self-binding suspension, according to some embodiments;
FIG. 3 shows x-ray diffraction data from a sample of TiO₂-ZnO suspension powder, according to some embodiments;
FIG. 4 shows a scanning electron microscope image of a sample of TiO₂-ZnO suspension powder, according to some embodiments;
FIG. 5 shows decomposition data for a sample of TiO₂-ZnO suspension powder and material disclosed in GR20110100056, according to some embodiments;
FIG. 6 shows gas concentrations under ultraviolet radiation for a self-binding suspension, according to some embodiments; and
FIG. 7 shows a transmittance spectrum of glass, material disclosed in GR20110100056, and a sample of TiO₂-ZnO suspension powder, according to some embodiments.

### DETAILED DESCRIPTION OF THE INVENTION

Provided herein are self-binding suspensions, coated substrates prepared using self-binding substrates, and methods of preparing self-binding suspensions using ultrasonication. In particular, the suspensions disclosed herein may be used to prepare thin films for products such as windshields, lenses, and solar energy devices. Due to the binary TiO₂-ZnO system, suspensions provided herein can provide more transparent films with improved photocatalytic activity than suspensions only having one of TiO₂ or ZnO.

To achieve these properties, the suspensions provided herein may include nanoparticles that are monodispersed and comprise agglomerates no larger than 200nm.

### SELF-BINDING SUSPENSION COMPOSITION

As described herein, the disclosed suspensions may include at least two metal oxides, a salt, a dispersant, a surfactant, alcohol, a Lewis base, and a solvent. Each individual component is described in detail below.

The metal oxides include TiO₂ and ZnO nanoparticles, and may include SiO₂ nanoparticles.

TiO₂ nanoparticles may be obtained from a powder. For example, a commercially available and low-cost titanium dioxide powder may be used as the titanium dioxide source. Suitable commercially available titanium dioxide powders can include Evonik Aeroxide^{™} P90, Evonik Aeroxide^{™} P25, or Kronos KRONOClean^{™} 7000. When diluted in water, a colloidal solution is prepared. In some embodiments, self-binding suspensions provided herein may include less than 0.1 wt. %, less than 0.05 wt. %, less than 0.01 wt. %, or less than 0.005 wt. % TiO₂ powder. In some embodiments, self-binding suspensions provided herein may include more than 0.0001 wt. %, more than 0.0005 wt. %, more than 0.001 wt. %, more than 0.005 wt. %, more than 0.01 wt. %, more than 0.05 wt. %, or 0.1 wt. % TiO₂ powder. Self-binding suspensions comprising insufficiently low concentrations of TiO₂ powder may result in thin films having too little photocatalytic activity. Conversely, self-binding suspensions comprising exceedingly high concentrations of TiO₂ powder may not meet the optical criteria of coating transparency.

ZnO nanoparticles may be obtained from a powder. For example, a commercially available and low-cost zinc oxide powder may be used as the zinc oxide source. Suitable commercially available zinc oxide powders may include EverZinc EPM-E^{™}, or Bochemie NanoZnO. When diluted in water, a colloidal solution can be prepared. In some embodiments, self-binding suspensions provided herein may include less than 0.5 wt. %, less than 0.1 wt. %, less than 0.05 wt. %, less than 0.01 wt. %, less than 0.005 wt. %, less than 0.001 wt. %, less than 0.0005 wt. %, less than 0.0001 wt. %, or less than 0.00005 wt. % ZnO powder. In some embodiments, self-binding suspensions provided herein may include more than 0.00001 wt. %, more than 0.00005 wt. %, more than 0.0001 wt. %, more than 0.0005 wt. %, more than 0.001 wt. %, more than 0.005 wt. %, more than 0.01 wt. %, more than 0.05 wt. %, or 0.1 wt. % ZnO powder. Self-binding suspensions comprising insufficiently low concentrations of ZnO powder may not assist the photocatalytic effect. Conversely, self-binding suspensions comprising exceedingly high concentrations of ZnO powder may be block incident photons capturing by titanium dioxide nanoparticles and therefore, permanently block the photocatalytic effect.

SiO₂ nanoparticles may be obtained from a sol-gel procedure. For example, commercially available silicon alkoxide raw materials can be used for the preparation of a colloidal suspension comprising SiO₂ powder. Suitable aminosilanes or silicon alkoxides can be any compound with chemical formula (H₂NCₙH₂ₙO)(CₖH₂ₖ₊₁O)(CₘH₂ₘ₊₁O)(CₚH₂ₚ₊₁O)Si or (CₙH₂ₙ₊₁O)(CₖH₂ₖ₊₁O)(CₘH₂ₘ₊₁O)(CₚH₂ₚ₊₁O)Si or polydimethylsiloxane (C₂H₆OSi)_{q} (CₙH₂ₙ+₁O)(CₖH₂ₖ₊₁O)(CₘH₂ₘ₊₁O)Si(CₗH₂ₗ)Si(CₓH₂ₓ₊₁O)(C_{y}H_{2y+1}O)(C_{z}H_{2z+1}O) (where n, k, l, m, p, x, y, z are positive, integer numbers from zero to eight and q is a positive integer numbers from zero to one thousand). For example, commercially available alkoxysilanes can include DOWSIL^{™} Z-6162, DOWSIL^{™} Xiameter 6697, and/or Dynasylan A. In some embodiments, the colloidal SiO₂ nanoparticles prepared from a sol-gel technique may be preferred to SiO₂ nanoparticles obtained from powders because they can enhance the superhydrophilicity of the final coating and act as adhesion binders to the substrate.

In some embodiments, self-binding suspensions provided herein may comprise less than 6 wt. % alkoxysilane. In some embodiments, self-binding suspensions provided herein may comprise more than 4 wt. %, or more than 6 wt. % alkoxysilane.

In some embodiments, self-binding suspensions provided herein may include a salt. For example, a salt may be used to control the ionic strength of the preparation emulsion or suspension. Salts dissociate in aqueous media to ions (ionic strength increase). Ions are absorbed on nanoparticle surface and electrostatically repel each other to prevent agglomeration and sedimentation. Therefore, fine tuning of ionic strength results in more stable nanoparticle emulsions and increase their commercial exploitation potential. To control the ionic strength of the preparation solution, the salt may induce electrostatic interactions between the ionic double layers surrounding the TiO₂ and ZnO nanoparticles. Examples of suitable salts include polyelectrolytes (e.g. poly(sodium styrene sulfonate), Na₄P₂O₇, sodium hydroxide, or sodium chloride. In some embodiments, the amounts, a self-binding suspension may include less than 0.001 wt. %, less than 0.0005 wt. %, less than 0.0001 wt. %, or less than 0.00005 wt. % salt. In some embodiments, a self-binding suspension may include more than 0.00005 wt. %, more than 0.0001 wt. %, more than 0.0005 wt. %, or more than 0.001 wt. % salt. Self-binding suspensions including an insufficiently low amount of salt may present sedimentation within hours after preparation, making the resulting formulation impractical to use. Conversely, self-binding suspensions including exceedingly high concentrations of salt may result in reduced photocatalytic activity, as salt ions create multilayers around nanoparticles and prevent chemical interaction with water or oxygen molecules.

Self-binding suspensions provided herein may include a dispersant for promoting the formation and stabilization of the nanoparticles in the solution. For example, commercially available dispersants can include Surfynol CT-231, Tego Flow 425, carboxylmethyl cellulose (CMC), dimethyl sulfoxide (DMSO), 1,2-Dipalmitoyl-sn-glycero-3-phosphocholine, Tween 80, bovine serum albumin (BSA), and fetal bovine serum (FBS). In some embodiments, self-binding suspensions may include less than 0.01 wt. %, less than 0.005 wt. %, less than 0.001 wt. %, or less than 0.0005 wt. % dispersant. In some embodiments, self-binding suspensions may include more than 0.0005 wt. %, more than 0.001 wt. %, or more than 0.005 wt. % dispersant.

Self-binding suspensions provided herein may include a surfactant. Surfactants may help improve substrate wetting by reducing the surface tension between the self-binding suspension/thin film and the substrate. Suitable commercially available surfactants may include Tego Wet 500, Tego Wet 270, and siloxane formulations. In some embodiments, self-binding suspensions may include less than 0.5 wt. % surfactant. In some embodiments, self-binding suspensions may include more than 0.5 wt. % surfactant.

In some embodiments, self-binding suspensions provided herein may include a liquid alcohol to hydrolyze the chemical binder. A suitable alcohol may include up to five carbon atoms (e.g., methanol, ethanol) and up to two oxygen atoms (CᵢH₂ᵢ₊₂O or CⱼH₂ⱼ₊₂O₂, where i and j are positive, integer numbers from one to five). In some embodiments, self-binding suspensions may include less than 10 wt. % alcohol. In some embodiments, suspensions may include more than 10 wt. % alcohol.

In some embodiments, a Lewis base may be included in a suspension provided herein to adjust the pH value during hydrolysis. In some embodiments, the pH may be adjusted and controlled to a value from 9 to 10. In some embodiments, self-binding suspensions may include less than 0.2 wt. % Lewis base. In some embodiments, self-binding suspensions may include more than 0.1 wt. % Lewis base.

Self-binding suspensions provided herein may include a solvent. Suitable solvents can include water (e.g., deionized) or alcohol. In some embodiments, self-binding suspensions may include less than 90 wt. %, or less than 85 wt. % solvent. In some embodiments, self-binding suspensions may include more than 80 wt. %, or more than 85 wt. %.

### COATED SUBSTRATES

The above-described self-binding suspension can be used to prepare coated substrates for applications including windshields, lenses, and/or solar energy devices. Discussed below are various application/deposition methods for preparing coated substrates.

Self-binding suspensions provided can be considered "self-binding" due to the ability of particularly the nanoparticles in the self-binding suspension to easily adhere to the substrate. Specifically, the silicon oxide nanoparticles act as a binder. In some embodiments, no heat treatment step is needed for the self-binding suspension to adhere to the substrate.

In some embodiments, a self-binding suspension may be used to form the coating on a thin-film substrate. For example, 0.001 to 0.1 L/m² of self-binding suspension may be deposited to the substrate. In some embodiments, less than 0.1 L/m², less than 0.08 L/m², less than 0.06 L/m², less than 0.04 L/m², less than 0.02 L/m², less than 0.01 L/m², or less than 0.005 L/m² self-binding suspension may be deposited on a substrate. In some embodiments, more than 0.001 L/m², more than 0.005 L/m², more than 0.01 L/m², more than 0.02 L/m², more than 0.04 L/m², more than 0.06 L/m², or more than 0.08 L/m² self-binding suspension may be deposited on a substrate.

In some embodiments, the substrate of the coated substrate may comprise an organic or an inorganic material. For example, suitable substrate materials may include glass, aluminum, metal substrates, cement and concrete, plasters and renders, polymer films, polycarbonate films, acrylic paint films, styrene-acrylic paint films, polyurethane paint films and epoxy paint films,

### EXAMPLE 1

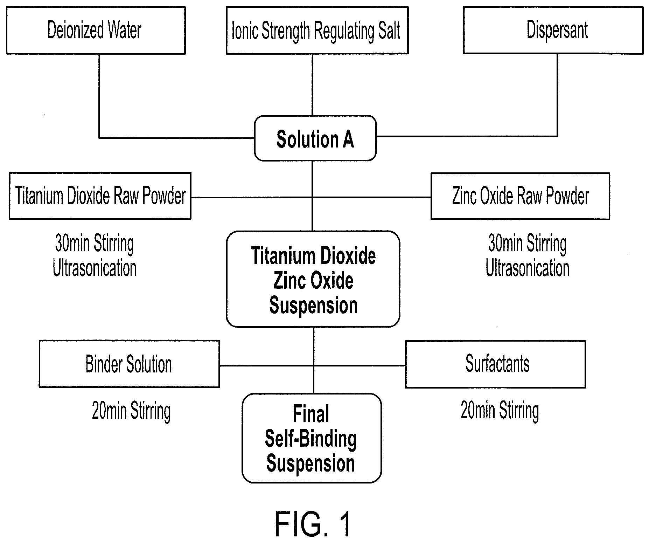

Figure 1 shows the flow chart of a preparation process of a self-binding suspension, according to some embodiments. As shown in the figure and explained in detail below, the binder solution is prepared separate from the TiO₂/ZnO colloidal suspension and combined in the final step to form a self-binding suspension according to embodiments provided herein.

**Preparing the Binder Solution:** Twenty Liters of alkoxysilane (1,6-bis(trimethoxysilyl)hexane; DOWSIL^{™} Z-6162, Dow Coming Europe SA) were mixed with 1L of methanol in a stainless steel 200L chemical reactor. Deionized water (75L) was added to the mixture and stirred for five minutes. A water-soluble Lewis base (25 wt. % ammonium hydroxide NH₄OH) was added dropwise to adjust the pH to 9.5. The mixture was stirred for 600 minutes until becoming a transparent liquid.

**Preparation of the TiO₂/ZnO colloidal suspension:** Deionized water (150L) was placed into a 250L stainless steel continuously stirring tank reactor. A stabilizing salt (Na₄P₂O₇, 0.3 kg) and 0.075 kg of dispersant (Surfynol CT-231, Air Products and Chemicals, Inc.) were diluted into the deionized water. The solution was vigorously stirred for 60 minutes at 600 rpm. After stirring, 0.75kg titanium dioxide powder (Evonik Aeroxide^{™} P90) and 0.075kg zinc oxide (EverZinc EPM-E^{™}) were added to the solution, resulting in a colloidal solution.

A Heilscher, UIP1000hd ultrasonic processor (power output: 800 Watts at 20 kHz) having a robust stainless steel reactor vessel was connected to the continuous-stirring tank reactor for 30 minutes. The ultrasonication tip was connected in the colloidal solution. After 30 minutes of ultrasonication, the resulting material was a stable TiO₂-ZnO suspension.

**Preparation of Final Self-Binding Suspension:** As depicted in Figure 1, the binder solution and the TiO₂-ZnO suspension, the preparation of each of which is described above, are combined with the surfactant (EVONIK, Tego Wet 500). The combination is mixed and stirred for 20 minutes at 600 rpm. The product is stable for at least six months (i.e., little or no sedimentation or precipitation of solid phase). Additionally, the resulting suspension may be applied to substrates using industrial deposition methods.

**Table 1, below, provides the weight-percent of each of the components described with respect to Example 1.**

| **Binder Solution** | |
|---|---|
| Component | Wt. % |
| Alkoxysilane | 14.35 |
| Alcohol | 24.06 |
| H₂O | 61.27 |
| Lewis base | 0.32 |

| **TiO₂/ZnO Suspension** | |
|---|---|
| Component | Wt. % |
| H₂O | 94.275-98.675 |
| Regulating Salt | 0.025 |
| Dispersant | 0.2 |
| TiO₂ | 0.1-5 |
| ZnO | 0.01-10.0* |

| **Final Self-Binding Suspension** | |
|---|---|
| Component | Wt. % |
| Binder Solution | 30-50 |
| Dispersant | 0.5 |
| Alcohol | 0.5 |
| H₂O | 43.5-68.4 |
| TiO₂/ZnO Suspension | 0.1-5 |
| Surfactant | 0.5 |

| | |
|---|---|
| *Weight percentage in relevance to the actual titanium dioxide wt. %. | |

### EXAMPLE 2

Figure 1 equally applies to the process of Example 2, described below, as it does with Example 1. As shown in the figure and explained in detail below, the binder solution is prepared separate from the TiO₂/ZnO colloidal suspension and combined in the final step to form a suspension according to embodiments provided herein.

**Preparation of the Binder Solution:** Twenty Liters of alkoxysilane (tetraethoxy silane; DOWSIL^{™} Xiameter 6697, Dow Corning Europe SA, and/or EVONIK^{™}, Dynasylan A) were mixed with 1L of ethanol in a 200L stainless steel chemical reactor. Deionized water (75L) was added to the mixture and stirred for 5 minutes. Sodium hydroxide in an aqueous solution was added dropwise to adjust the pH to 9.5. The mixture was stirred for 600 minutes until a transparent liquid was achieved.

**Preparation of the TiO₂/ZnO colloidal suspension:** Deionized water (130L) was placed in a 250L stainless steel continuous stirring tank reactor. The stabilizing salt (0.25kg, NaCl) and 0.07kg of dispersant (Surfynol CT-231, Air Products and Chemicals, Inc.) were diluted in the deionized water. The solution was vigorously stirred for 60 minutes at 600 rpm. After stirring, 0.65 kg of titanium dioxide powder (Evonik Aeroxide^{™} P90) and 0.013kg of zinc oxide (EverZinc EPM-E^{™}) are added to create a colloidal solution.

A Hielscher, UIP1000hd ultrasonic processor (power output: 800 Watts at 20 kHz) having a robust stainless steel reactor vessel was connected to the continuous-stirring tank reactor for 30 minutes. The ultrasonication tip was connected in the colloidal solution. After 30 minutes of ultrasonication, the resulting material was a stable TiO2-ZnO suspension.

**Preparation of the Final Self-binding Suspension:** As depicted in Figure 1, the binder solution and the TiO₂-ZnO suspension, the preparation of each of which is described above, are combined with the surfactant (EVONIK, Tego Wet 270). The combination is mixed and stirred for 20 minutes at 600 rpm. The product is stable for at least six months (i.e., little or no sedimentation or precipitation of solid phase). Additionally, the resulting suspension may be applied to substrates using industrial deposition methods.

Table 1, provided above, provides the weight-percent of each component described with respect to Example 2.

### EXAMPLE 3

**Applying the Prepared Suspension to Glass Substrates:** The prepared self-binding suspension (i.e., the suspension of Example 1 or Example 2) was mist air-sprayed onto glass substrates. Specifically, the amount of suspension that was deposited onto the glass substrate was 0.0285 L/m². The wet suspension dried and resulted in an immobilized SiO₂/TiO₂/ZnO thin film. Note that no heat treatment was used.

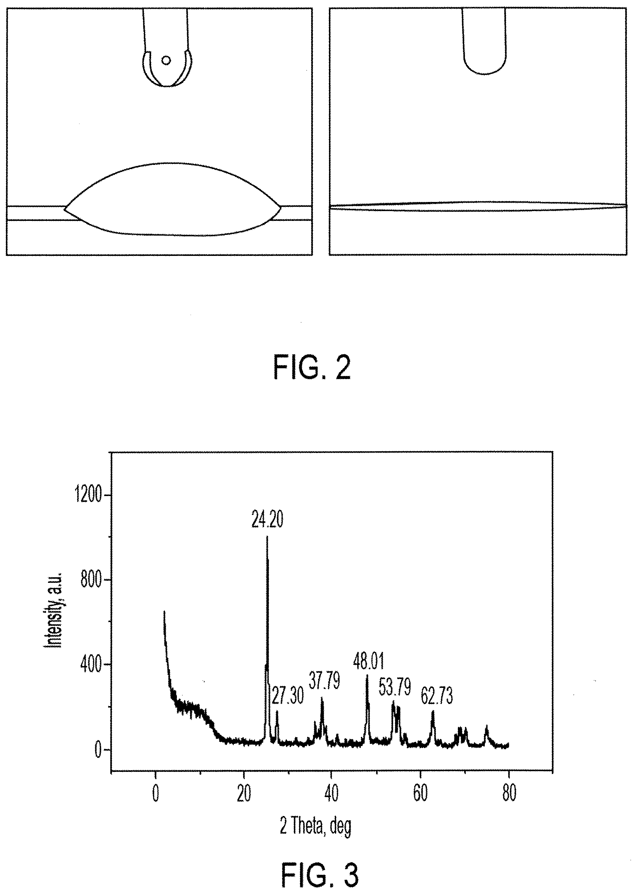

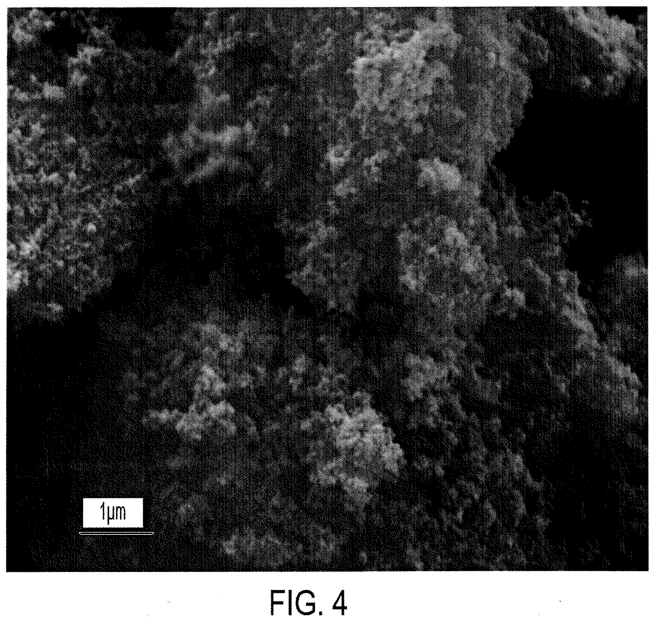

Figure 2 shows the contact angle of a water droplet on an untreated glass substrate and on a glass substrate coated with a thin film formed from a suspension according to embodiments provided herein. The contact angle was measured using a computer-controlled optical tensiometer. Results show that contact angle of water with the coating is less than 10 degrees, therefore intense hydrophilicity is observed. As shown in Figure 4, the high contact angle of the water droplet on the treated glass substrate demonstrates that the thin-film coating prepared using suspensions according to embodiments provided herein are hydrophilic.

Figure 3 shows x-ray diffraction data obtained from TiO₂-ZnO suspension powder. In particular, Figure 3 shows the XRD characteristic peaks obtained from the TiO₂/ZnO colloidal suspension. The marked peaks (marked with numbers) are in accordance with the characteristic peaks of pure TiO₂ nanoparticles. In detail, the observed peaks for TiO₂ are: 24.20° (A), 27.30 ° (R), 37.79 ° (A), 48.01 ° (A), 53.79 ° (A), 62.73 ° (A), 68.79 ° (A), 70.00 ° (A) and 75.10 ° (A), which correspond to the (101), (110), (004), (200), (105), (204), (116), (220), (116), (220) and (215) crystal planes for pure TiO₂. The symbols A and R denote anatase and rutile phase, respectively. From the XRD-pattern it is clear that the TiO₂ nanoparticles consist from two crystal phases; one is anatase and the other is rutile. In addition, is possible to calculate the ratio of anatase/rutile in the solution from the relative intensities. By using the equations A(%) = 100/{1+1.265(I_{R}/I_{A})} and R(%) = 100-A(%), the mass ratio of anatase/rutile in our solutions is 80%/20%. Where A(%) and R(%) are the percentages of anatase and rutile, respectively. I_{R} is the intensity corresponds to the main peak for rutile (110) at angle 2θ equal to 27.30° and I_{A} is the intensity corresponds to the main peak for anatase (101) at angle 2θ equal to 24.20°. This mass percentage 80/20 is in totally accordance with the specifications provided for the raw material used for preparation of the samples. In the case of ZnO nanoparticles the peaks are allocated at angles 2θ around 32 °, 34 °, 36 °, 47 °, 57°, 63 °, 66 °, 68 ° and 69° correspond to the (100), (002), (101), (102), (110), (103), (200), (112) and (201) crystal planes for pure ZnO nanoparticles. It should be noticed that the peaks of ZnO due to the low percentage used in the solutions can be shifted depending the composition of the solution. For the ZnO nanoparticles the main peak is at 36.38° which corresponds to (101) crystal plane. For this reason, the quantitative analysis for calculation of the ZnO percentage is difficult in the presence of TiO₂ nanoparticles. In addition, the XRD peaks are very sharp indicating that the NANOPARTICLEs are crystalline and well within the nano-range. Owing to this fact, by using the Scherrer equation d = 0.9λ/Bcosθ, (where d is the mean size of the nanoparticles, λ is the X-ray wavelength equal to 1.542Å, B is the peak width at half the maximum intensity and θ is the angle corresponding to the main peak), we calculated that the nanoparticles which form the TiO₂-ZnO suspension is in in the range of 26nm.

Figure 4 shows a scanning electron microscope image obtained from TiO₂-ZnO suspension powder. As shown in the figure, the powder comprises nanoparticles and porosity, which can extend the surface area of the powders. From the scanning electron microscope characterization it is obvious that the primary nanoparticles do not exceed the size of 50 nm.

**Evaluating the Photocatalytic Activity of the Self-Binding Suspension:** The photocatalytic activity of the final self-binding suspension was evaluated by two procedures: (1) degradation of methyl orange (pollutant, organic compound) under UV illumination; and (2) by nitric oxide (inorganic pollutant) oxidation under UV and visible light irradiation.

The first procedure, degradation of methyl orange, was conducted using roundbottom photocatalytic cells with a near UV-transparent window (cut off below 340 nm). A laboratory-constructed irradiation box equipped with four Sylvania GTE 15W F15W/T8 blacklight blue fluorescent light tubes was used. The photon source had a maximum emission at 350 nm and emitted 71.7µW/cm to simulate natural sunlight. The concentration was correlated to the absorption of the methyl orange solution at 464 nm, using a single beam Shimadzu UV 1240 spectrophotometer. The sample was stirred throughout the procedure.

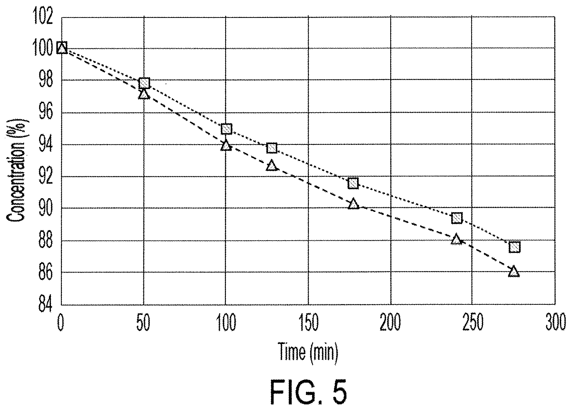

Based on the methyl orange degradation test, the final self-binding suspension demonstrates improved photocatalytic properties compared to the colloidal suspension of GR20110100056. Figure 5 shows the decomposition of methyl orange as a function of time for the material of GR20110100056, and the self-binding suspension of the present invention. In particular, Figure 5 shows the degradation of methyl orange versus time for each of these two samples.

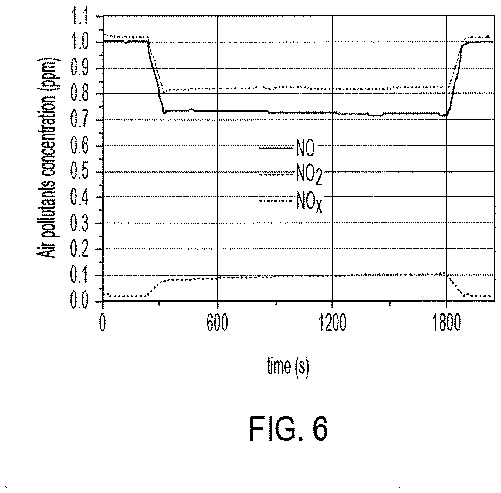

The second procedure, nitric oxide oxidation under UC and visible light irradiation, was evaluated under UV-A light illumination with intensity 10 W/m². The duration of the experiments was almost 5h. The NO gas was supplied from gas container with 50 ppm NO concentration in nitrogen N₂. The NO concentration in the reactor was adjusted to 1 ppm and the relative humidity was kept at 50 % using dry and wet air. The NO gas flow rate over the samples was approximately 3L/min. Under UV illumination, NO gas was adsorbed on the surface of photocatalysts and successively oxidized to NO₂ gas first and then to nonvolatile nitrates. The NOx concentration in the air was retrieved by the summation of NO and NO₂ concentrations. The measurement results are presented in Figure 6. The photocatalytic study includes measurements of the NO monoxide, measurements of the NO₂ dioxide and determination of NOₓ removal. The investigated sample with photocatalytic material exhibited stable photocatalytic activity in NOₓ removal during 5h illumination period and revealed production of NO₂ gas in the range of 20%.

Figure 6 shows gas concentration under ultraviolet irradiation of a self-binding suspension. As shown in the Figure, nitric acid oxidation shows superior photocatalytic behavior under visible light irradiation. This behavior is easily attributed to the favorable modified band gaps edges existing in the presented ternary system.

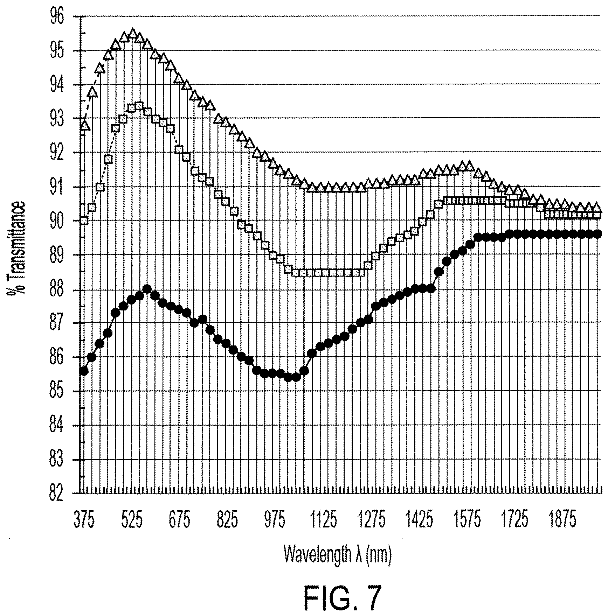

Figure 7 shows a transmittance spectrum of untreated glass, glass treated with material of GR20110100056, and glass treated with the self-binding suspension described herein. As shown in the figure, the glass treated with the self-binding suspension described herein consistently transmits more light than untreated glass or the glass treated with material of GR20110100056, across wavelengths 375-1975nm.

**Aging Test:** The adhesion behavior of coatings prepared using self-binding suspensions provided herein was tested using an aging test. In particular, the aging test according to ISO EN 11507 was conducted. During the test, no coating exfoliation was observed (i.e., no physical change on the surface of the coated glass).

The preceding description sets forth exemplary methods, parameters and the like. It should be recognized, however, that such description is not intended as a limitation on the scope of the present disclosure but is instead provided as a description of exemplary embodiments. The illustrative embodiments described above are not meant to be exhaustive or to limit the disclosure to the precise forms disclosed. Many modifications and variations are possible in view of the above teachings. The embodiments were chosen and described to best explain the principles of the disclosed techniques and their practical applications. Others skilled in the art are thereby enabled to best utilize the techniques, and various embodiments with various modifications as are suited to the particular use contemplated.

Although the preceding description uses terms first, second, etc. to describe various elements, these elements should not be limited by the terms. These terms are only used to distinguish one element from another.

Also, it is also to be understood that the singular forms "a," "an," and "the" used in the preceding description are intended to include the plural forms as well unless the context indicates otherwise. It is also to be understood that the term "and/or" as used herein refers to and encompasses any and all possible combinations of one or more of the associated listed items. It is further to be understood that the terms "includes, "including," "comprises," and/or "comprising," when used herein, specify the presence of stated features, integers, steps, operations, elements, components, and/or units but do not preclude the presence or addition of one or more other features, integers, steps, operations, elements, components, units, and/or groups thereof.

The term "if" may be construed to mean "when" or "upon" or "in response to determining" or "in response to detecting," depending on the context.

## Claims

1. A self-binding suspension composition comprising:
0.0001 to 0.25 wt. % titanium dioxide nanoparticles;
0.00001 to 0.5 wt. % zinc oxide nanoparticles;
4 to 7 wt. % alkoxysilane;
0.000025 to 0.00125 wt. % salt;
0.0002 to 0.01 wt. % dispersant;
0.2 to 0.8 wt. % surfactant;
7 to 12 wt. % alcohol;
0.1 to 0.2 wt. % basic solution; and
80 to 90 wt. % solvent.

2. A coated glass substrate comprising:
a glass substrate; and
a thin-film coating on the glass substrate, the thin-film coating comprising:
0.001 to 5 wt. % titanium dioxide powder;
0.0001 to 10 wt. % zinc oxide powder;
20 to 35 wt. % alkoxysilane;
0.00025 to 0.026 wt. % salt;
0.002 to 0.2 wt. % dispersant;
1 to 8 wt. % surfactant;
35 to 60 wt. % alcohol; and
0.5 to 4 wt. % basic solution.

3. The composition of claim 1 or the coated glass substrate of claim 2, wherein the salt comprises at least one of Na₄P₂O₇, sodium hydroxide, or sodium chloride.

4. The composition of claim 1 or the coated glass substrate of claim 2, wherein the alcohol comprises at least one of methanol or ethanol.

5. The composition of claim 1 or the coated glass substrate of claim 2, wherein the solvent comprises deionized water.

6. The coated glass substrate of claim 2, wherein 0.01 to 0.03 L/m² of a self-binding suspension composition is applied to the glass substrate to form the coated glass substrate; wherein the self-binding suspension composition comprises:
0.0001 to 0.25 wt. % titanium dioxide nanoparticles;
0.00001 to 0.5 wt. % zinc oxide nanoparticles;
4 to 7 wt. % alkoxysilane;
0.000025 to 0.00125 wt. % salt;
0.0002 to 0.01 wt. % dispersant;
0.2 to 0.8 wt. % surfactant;
7 to 12 wt. % alcohol;
0.1 to 0.2 wt. % basic solution; and
80 to 90 wt. % solvent.

7. The coated glass substrate of claim 2, wherein the coated glass substrate comprises a windshield, a lens, or a solar energy device

8. A method of producing a coated glass substrate comprising:
preparing a binder solution;
preparing a titanium dioxide-zinc oxide suspension;
mixing the binder solution with the titanium dioxide-zinc oxide suspension and a surfactant to form a self-binding suspension composition of claim 1; and
depositing the self-binding suspension composition onto a glass substrate to form a coated glass substrate.

9. The method of claim 8, wherein preparing the binder solution comprises mixing alkoxysilane, an alcohol, a Lewis base, and a first solvent.

10. The method of claim 8, wherein preparing a titanium dioxide-zinc oxide suspension comprises ultrasonifying a salt, a dispersant, titanium dioxide powder, zinc oxide powder, and a second solvent.

11. The method of claim 8, wherein the coated glass substrate comprises a windshield, a lens, or a solar energy device.

12. The method of claim 10, wherein the salt comprises at least one of Na₄P₂O₇, sodium hydroxide, or sodium chloride.

13. The method of claim 9, wherein the alcohol comprises at least one of methanol or ethanol.

14. The method of claim 9, wherein the first solvent and the second solvent comprise deionized water.

15. The method of claim 8, wherein depositing the self-binding suspension onto a glass substrate comprises depositing 0.01 to 0.03 L/m² of the self-binding suspension composition to the glass substrate.

## Patentansprüche

1. Selbstbindende Suspensions-Zusammensetzung, die Folgendes umfasst:
0,0001 bis 0,25 Gew.-% Titandioxid-Nanopartikel;
0,00001 bis 0,5 Gew.-% Zinkoxid-Nanopartikel;
4 bis 7 Gew.-% Alkoxysilan;
0,000025 bis 0,00125 Gew.-% Salz;
0,0002 bis 0,01 Gew.-% Dispergiermittel;
0,2 bis 0,8 Gew.-% Tensid;
7 bis 12 Gew.-% Alkohol;
0,1 bis 0,2 Gew.-% basische Lösung; und
80 bis 90 Gew.-% Lösungsmittel.

2. Beschichtetes Glassubstrat, das Folgendes umfasst:
ein Glassubstrat; und
eine Dünnfilm-Beschichtung auf dem Glassubstrat, wobei die Dünnfilm-Beschichtung Folgendes umfasst:
0,001 bis 5 Gew.-% Titandioxid-Pulver;
0,0001 bis 10 Gew.-% Zinkoxid-Pulver;
20 bis 35 Gew.-% Alkoxysilan;
0,000025 bis 0,026 Gew.-% Salz;
0,002 bis 0,2 Gew.-% Dispergiermittel;
1 bis 8 Gew.-% Tensid;
35 bis 60 Gew.-% Alkohol; und
0,5 bis 4 Gew.-% basische Lösung.

3. Zusammensetzung nach Anspruch 1 oder beschichtetes Glassubstrat nach Anspruch 2, wobei das Salz zumindest eines aus Na₄P₂O₇, Natriumhydroxid und Natriumchlorid umfasst.

4. Zusammensetzung nach Anspruch 1 oder beschichtetes Glassubstrat nach Anspruch nach Anspruch 2, wobei der Alkohol zumindest einen aus Methanol und Ethanol umfasst.

5. Zusammensetzung nach Anspruch 1 oder beschichtetes Glassubstrat nach Anspruch 2, wobei das Lösungsmittel deionisiertes Wasser umfasst.

6. Beschichtetes Glassubstrat nach Anspruch 2, wobei 0,01 bis 0,03 l/m² einer selbstbindenden Suspensions-Zusammensetzung auf das Glassubtrat aufgetragen sind, um das beschichtete Glassubstrat zu bilden; wobei die selbstbindende Suspensions-Zusammensetzung Folgendes umfasst:
0,0001 bis 0,25 Gew.-% Titandioxid-Nanopartikel;
0,00001 bis 0,5 Gew.-% Zinkoxid-Nanopartikel;
4 bis 7 Gew.-% Alkoxysilan;
0,000025 bis 0,00125 Gew.-% Salz;
0,0002 bis 0,01 Gew.-% Dispergiermittel;
0,2 bis 0,8 Gew.-% Tensid;
7 bis 12 Gew.-% Alkohol;
0,1 bis 0,2 Gew.-% basische Lösung; und
80 bis 90 Gew.-% Lösungsmittel.

7. Beschichtetes Glassubstrat nach Anspruch 2, wobei das beschichtete Glassubstrat eine Windschutzscheibe, eine Linse oder eine Solarenergie-Vorrichtung umfasst.

8. Verfahren zur Herstellung eines beschichteten Glassubstrats, das Folgendes umfasst:
das Herstellen einer Bindemittel-Lösung;
das Herstellen einer Titandioxid-Zinkoxid-Suspension;
das Vermischen der Bindemittel-Lösung mit der Titandioxid-Zinkoxid-Suspension und einem Tensid, um eine selbstbindende Suspensions-Zusammensetzung nach Anspruch 1 zu bilden; und
das Aufbringen der selbstbindenden Suspensions-Zusammensetzung auf ein Glassubstrat, um ein beschichtetes Glassubstrat zu bilden.

9. Verfahren nach Anspruch 8, wobei das Herstellen der Bindemittel-Lösung das Vermischen von Alkoxysilan, eines Alkohols, einer Lewis-Base und eines ersten Lösungsmittels umfasst.

10. Verfahren nach Anspruch 8, wobei das Herstellen einer Titandioxid-Zinkoxid-Suspension das Ultrabeschallen eines Salzes, eines Dispergiermittels, eines Titandioxid-Pulvers, eines Zinoxid-Pulvers und eines zweiten Lösungsmittels umfasst.

11. Verfahren nach Anspruch 8, wobei das beschichtete Glassubstrat eine Windschutzscheibe, eine Linse oder eine Solarenergie-Vorrichtung umfasst.

12. Verfahren nach Anspruch 10, wobei das Salz zumindest eines aus Na₄P₂O₇, Natriumhydroxid und Natriumchlorid umfasst.

13. Verfahren nach Anspruch 9, wobei der Alkohol zumindest einen aus Methanol und Ethanol umfasst.

14. Verfahren nach Anspruch 9, wobei das erste Lösungsmittel und das zweite Lösungsmittel deionisiertes Wasser umfassen.

15. Verfahren nach Anspruch 8, wobei das Aufbringen der selbstbindenden Suspension auf ein Glassubstrat das Aufbringen von 0,01 bis 0,03 l/m³ der selbstbindenden Suspension auf das Glassubstrat umfasst.

## Revendications

1. Composition de suspension auto-liante, comprenant :
de 0,0001 à 0,25 % en poids de nanoparticules de dioxyde de titane ;
de 0,00001 à 0,5 % en poids de nanoparticules d'oxyde de zinc ;
de 4 à 7 % en poids d'alcoxysilane ;
de 0,000025 à 0,00125 % en poids de sel ;
de 0,0002 à 0,01 % en poids de dispersant ;
de 0,2 à 0,8 % en poids de tensioactif ;
de 7 à 12 % en poids d'alcool ;
de 0,1 à 0,2 % en poids de solution basique ; et
de 0,80 à 90 % en poids de solvant.

2. Substrat de verre revêtu, comprenant :
un substrat en verre ; et
un revêtement de film mince sur le substrat de verre, le revêtement de film mince comprenant :
de 0,001 à 5 % en poids de poudre de dioxyde de titane ;
de 0,0001 à 10 % en poids de poudre d'oxyde de zinc ;
de 20 à 35 % en poids d'alcoxysilane ;
de 0,00025 à 0,026 % en poids de sel ;
de 0,002 à 0,2 % en poids de dispersant ;
de 1 à 8 % en poids de tensioactif ;
de 35 à 60 % en poids d'alcool ; et
de 0,5 à 4 % en poids de solution basique.

3. Composition selon la revendication 1 ou substrat de verre revêtu selon la revendication 2, le sel comprenant au moins un parmi du Na₄P₂O₇, de l'hydroxyde de sodium ou du chlorure de sodium.

4. Composition selon la revendication 1 ou substrat de verre revêtu selon la revendication 2, l'alcool comprenant au moins un parmi du méthanol ou de l'éthanol.

5. Composition selon la revendication 1 ou substrat de verre revêtu selon la revendication 2, le solvant comprenant de l'eau désionisée.

6. Substrat de verre revêtu selon la revendication 2, dans lequel de 0,01 à 0,03 L/m² d'une composition de suspension auto-liante est appliqué au substrat de verre pour former le substrat de verre revêtu ;
dans lequel la composition de suspension auto-liante comprend :
de 0,0001 à 0,25 % en poids de nanoparticules de dioxyde de titane ;
de 0,00001 à 0,5 % en poids de nanoparticules d'oxyde de zinc ;
de 4 à 7 % en poids d'alcoxysilane ;
de 0,000025 à 0,00125 % en poids de sel ;
de 0,0002 à 0,01 % en poids de dispersant ;
de 0,2 à 0,8 % en poids de tensioactif ;
de 7 à 12 % en poids d'alcool ;
de 0,1 à 0,2 % en poids de solution basique ; et
de 80 à 90 % en poids de solvant.

7. Substrat de verre revêtu selon la revendication 2, dans lequel le substrat de verre revêtu comprend un pare-brise, une lentille ou un dispositif à énergie solaire

8. Procédé de fabrication d'un substrat de verre revêtu, comprenant les étapes consistant à :
préparer une solution de liant ;
préparer une suspension de dioxyde de titane-oxyde de zinc ;
mélanger la solution de liant avec la suspension de dioxyde de titane-oxyde de zinc et un tensioactif pour former une composition de suspension auto-liante selon la revendication 1 ; et
déposer la composition de suspension auto-liante sur un substrat de verre pour former un substrat de verre revêtu.

9. Procédé selon la revendication 8, dans lequel la préparation de la solution de liant comprend un mélange d'un alcoxysilane, d'un alcool, d'une base de Lewis et d'un premier solvant.

10. Procédé selon la revendication 8, dans lequel la préparation d'une suspension de dioxyde de titane-oxyde de zinc comprend une ultrasonification d'un sel, d'un dispersant, d'une poudre de dioxyde de titane, d'une poudre d'oxyde de zinc et d'un second solvant.

11. Procédé selon la revendication 8, dans lequel le substrat de verre revêtu comprend un pare-brise, une lentille ou un dispositif à énergie solaire.

12. Procédé selon la revendication 10, dans lequel le sel comprend au moins un parmi du Na₄P₂O₇, de l'hydroxyde de sodium, ou du chlorure de sodium.

13. Procédé selon la revendication 9, dans lequel l'alcool comprend au moins un parmi du méthanol ou de l'éthanol.

14. Procédé selon la revendication 9, dans lequel le premier solvant et le second solvant comprennent de l'eau désionisée.

15. Procédé selon la revendication 8, dans lequel le dépôt de la suspension auto-liante sur un substrat de verre comprend le dépôt de 0,01 à 0,03 L/m² de la composition de suspension auto-liante sur le substrat de verre.
